# EUROPÄISCHE PATENTANMELDUNG

(11) **EP 0 584 593 A2**
(43) Veröffentlichungstag der Anmeldung: **02.03.1994**
(21) Anmeldenummer: 93112463.0
(22) Anmeldetag: 04.08.1993
(51) Int. Cl.: B32B 7/04, C08J 5/12

(54) **Verbunde als Gestaltungen durch thermisches Verbinden**

(30) Priorität: 12.08.1992 DE 9210767 U
(71) Anmelder: RÖHM GMBH, D-64293 Darmstadt (DE)
(72) Erfinder: Fischer, Udo, Dr.-Ing., D-64297 Darmstadt-Eberstadt (DE); Fehring, Karl-Heinz, D-64589 Stockstadt/Rh. (DE)

(57) **Zusammenfassung**

Es werden in neuer Weise gestaltete Gegenstände, die Verbunde mit Acrylkunststoff sind, beschrieben, bei denen der Verbund durch thermisches Verschweißen des Acrylkunststoffs mit dem anderen Kunststoffteil, das wiederum aus einem Acrylkunststoff oder auch einem anderen thermoplastisch bis thermoelastisch verarbeitbaren Kunststoff bestehen kann, in Gegenwart einer 0,01 bis zu einigen mm dicken Zwischenschicht eines im wesentlichen aus Methylmethacrylat aufgebauten Polymeren, erreicht ist.

## Beschreibung

### Gebiet der Erfindung

Die Erfindung betrifft in neuer Weise gestaltete Gegenstände, die Verbunde mit Acrylkunststoff sind.

### Stand der Technik

Acrylgläser Zeigen als organische Kunststoffe aus Polymethacrylaten thermoplastisches bis thermoelastisches Verhalten bei ihrer Verarbeitung. Der technisch wichtigste Vertreter der Polymethacrylate ist das Polymethylmethacrylat (PMMA), das sich nach seiner Bildung durch Polymerisation von Methylmethacrylat, gegebenenfalls in Gegenwart von geringen Mengen anderer Comonomerer, wie z.B. Ethylacrylat, durch nachträgliches Spritzgießen bzw. Extrudieren zu Gegenständen der verschiedensten Art formen läßt. PMMA-Formmasse zum Spritzgießen hat eine Molmasse von ca. 120 000 g/mol und solche zum Extrudieren eine Molmasse von ca. 180 000 g/mol. PMMA mit deutlich höheren Molmassen, wie z.B. mit ca. 10⁶ g/mol und darüber, zeigen als gegossene Acrylgläser nur noch thermoelastisches Verhalten und sind mit den oben beschriebenen Verfahren nicht weiter verarbeitbar.

Gegossene Acrylgläser können jedoch wie auch Extrusions- und Spritzgußteile aus PMMA-Formmasse mit sich selbst oder anderen Stoffen verbunden werden. Die Herstellung der Verbunde werden vor allem mit Klebeverfahren durchgeführt. Bei den Klebeverfahren werden unterschieden: Verklebung mit Lösemitteln, Verklebung mit Kleblacken und Verklebung mit Polymerisationsklebern. Nachteilig bei den Klebverfahren mit Lösemitteln und Kleblacken ist, daß beide Verfahren mit Lösemitteln, insbesondere mit halogenierten aliphatischen Kohlenwasserstoffen, wegen deren günstigen Anlöseeigenschaften für PMMA, arbeiten, und diese dadurch Gesundheits- und Umwelt-gefährdende Risiken in sich bergen.

Bei Klebverfahren, die mit Lösemitteln arbeiten, kann es durch deren Einwirkung beim Kleben zu Rißbildung kommen, insbesondere bei Klebungen mit Spritzgußteilen, die fast immer Eigenspannungen aufweisen. Die Polymerisationskleber zum Verkleben von Formteilen aus Acrylkunststoff enthalten die Komponenten Methylmethacrylat, Polymethylmethacrylat und zur Beschleunigung des Klebvorgangs einen Initiator, wie Peroxide oder Lichtinitiatoren oder Redoxkomponenten. Auch bei diesem Verfahren kann durch das auch als Lösemittel wirkende Methylmethacrylat, Spannungsrißkorrosion in PMMA-Teilen auftreten. Die Härtungszeit liegt bei diesen Systemen im Bereich von 1 bis 3 Stunden.

Außer durch Kleben können Verbunde mit Acrylkunststoffen, insbesondere mit PMMA, auch durch thermisches Verschweißen hergestellt werden. Dazu lassen sich sowohl Formteile aus Formmassen als auch Formteile aus gegossenem, hochmolekularem PMMA verwenden. Bei Temperaturen über 100 Grad C werden Acrylglasformteile, je nach Temperatureinwirkung und dem Molekulargewicht der PMMA-Masse, weichgummiähnlich-elastisch bis plastisch und sind dann
unter Druck verschweißbar. Diese Eigenschaften werden u.a. bei der thermischen Verschweißung von Platten, Stäben und Rohren ausgenutzt.
(Kunststoff-Handbuch, Band IX, Polymethacrylate, Carl Hanser Verlag München 1975, Seiten 466, 467, 600, 601, 604 - 608, 613 - 614).
Die Herstellung von Verbunden mit Acrylglas wird vorwiegend verklebend und nur in Sonderfällen verschweißend durchgeführt.

### Aufgabe und Lösung

Es waren Kunststoff-Verbunde mit Acrylglas in einem verbesserten Verbindungsverfahren herzustellen.

Gefunden wurde, daß solche Verbunde mit Acrylglas einfach, schnell und in optisch guter Qualiät gestaltbar sind, wenn die Kunststoff-Verbundteile über eine dünne Zwischenschicht aus Polymethylmethacrylat, z.B. in Folienform miteinander thermisch verschweißt werden.

### Die Erfindung betrifft danach:

Kunststoffverbunde, bei denen mindestens ein Teil des Verbundes aus Acrylglas besteht und mindestens eine Acrylglasverbindung durch Verschweißen bewirkt ist,
dadurch gekennzeichnet,
daß das Verbinden durch thermisches Verschweißen in Gegenwart einer 0,01 bis zu einigen mm dicken Zwischenschicht eines im wesentlichen aus Methylmethacrylat aufgebauten Polymeren erreicht ist.

Die für das Verschweißen notwendige Wärmeenergie kann nach verschiedenen Methoden in die zu verbindenden Teile eingebracht werden, wie z.B. mit Infrarotstrahlern, Heißluftgebläsen, oder auch mit indirekten physikalischen Methoden, wie dem Anlegen von Hochfrequenz- oder Ultraschallfeldern. Das thermische Verschweißen erfordert das Erhitzen der Materialien auf Temperaturen von 150 bis 200 Grad C, vorzugsweise auf etwa 170 Grad C, wobei die erhitzten Teile unter Druck zusammengepreßt werden.

Der Vorteil der gefundenen Verbindungsart gegenüber dem Kleben ist die schnellere Herstellung in Verbindung mit dem Fehlen von umweltschädlichen Lösemitteln. Es werden optisch gute Verbindungsstellen, vor allem bei farblosen, transparenten Materialien, farblose Verbindungsstellen erzeugt, wie sie bei Verklebungen nicht erhalten werden. Die Adhäsion der zusammengeschweißten Teile ist so stark, daß beim Versuch die Verbindung gewaltsam zu zerstören, oft nicht die Nahtstelle, sondern das Verbundmaterial selbst bricht.
Mit dem Verschweißen in Gegenwart einer dünnen Zwischenschicht aus Polymethylmethacrylat, insbesondere in Folienform, lassen sich eine Reihe besonderer und erfindungsgemäßer Ausgestaltungen der Kunststoffverbunde schaffen.

### Erfindungsgemäße Ausgestaltungen

Erfindungsgemäße Verbunde können mit plattenförmigen oder auch mit beliebig geformten Acrylglas-Teilen, wobei die die Verbindung eingehende Stelle möglichst eine ebene Fläche ist, hergestellt sein. Das Acrylglas ist ein im wesentlichen aus Methylmethacrylat hergestelltes Polymerisat, wobei dies sowohl spritzgegossenes, extrudiertes oder gegossenes Polymethacrylat sein kann. Vorwiegend ist das Acrylglas in seiner farblosen, transparenten Originalform Verbundteil. Es kann aber auch in farbig durchscheinender Ausführung oder pigmentiert in dem Verbund vorhanden sein.

Auch die Zwischenschichten aus Polymethylmethacrylat können in farblos transparenter Form oder in beliebig farbiger und durchscheinender oder pigmentierter Form im Verbundaufbau vorhanden sein. Dadurch lassen sich bestimmte Farbeffekte im Verbund einstellen. Eine Zwischenschicht, die nur in Randlagen der zu verbindenden Platten als Verbindung wirkt, führt zu einem Verbund mit innerem, meist rechteckigem Hohlraum, der zur Aufnahme gegebenenfalls auswechselbarer Informationen dienen kann. Die Dicke der Zwischenschichten liegt zwischen 0,01 und einigen mm, bevorzugt zwischen 0,02 und 3 mm, vor allem zwischen 0,05 und 1,5 mm, d.h. sie sind in Form von Folien bis dünnen Platten in den Verbund eingeschweißt.

Die Formteile aus Acrylkunststoffen und die Zwischenschichten sind Polymerisate des Methylmethacrylats, die bis zu 50 Gew.-% aus anderen, damit radikalisch mischpolymerisierbaren Monomeren aufgebaut sein können. Vorzugsweise beträgt der Anteil des Methylmethacrylats 80 bis 100 Gew.-%. Als Comonomere kommen in erster Linie Alkylester der Acrylsäure mit 1 bis 4 Kohlenstoffatomen im Alkylrest, sowie Acryl- und/oder Methacrylnitril, Styrol oder Maleinsäureanhydrid in Betracht. Bevorzugt sind thermoplastisch und thermoelastisch verformbare Acrylkunststoffe als Acrylgläser, ihre Viskositätszahl nach DIN 53 727 bzw. 51 562, Teil 1, liegt vorzugsweise im Bereich von 20 bis 1 500 ml/g.

Die Formteile aus Acrylglas können in Gegenwart der dünnen Zwischenschichten aus vorzugsweise Polymethylmethacrylat, mit Formteilen aus anderen Kunststoffen, wie PVC, Celluloseestern, Polystyrol, ABS-Kunststoffen, Polycarbonat, insbesondere dem Polycarbonat des Bisphenol A, verbunden sein. Ihre Vicat-Erweichungstemperatur soll nicht unter 70 Grad C liegen. Sie können als farblose, farbige, transparente oder nichttransparente Teile im Verbund vorhanden sein. Die Oberfläche der Kunststofformteile - sowohl diejenigen aus Acrylglas, als auch Teile aus anderen Kunststoffen - können strukturiert sein.

Ausgestaltungen der Erfindung sind folgend beispielhaft beschrieben.

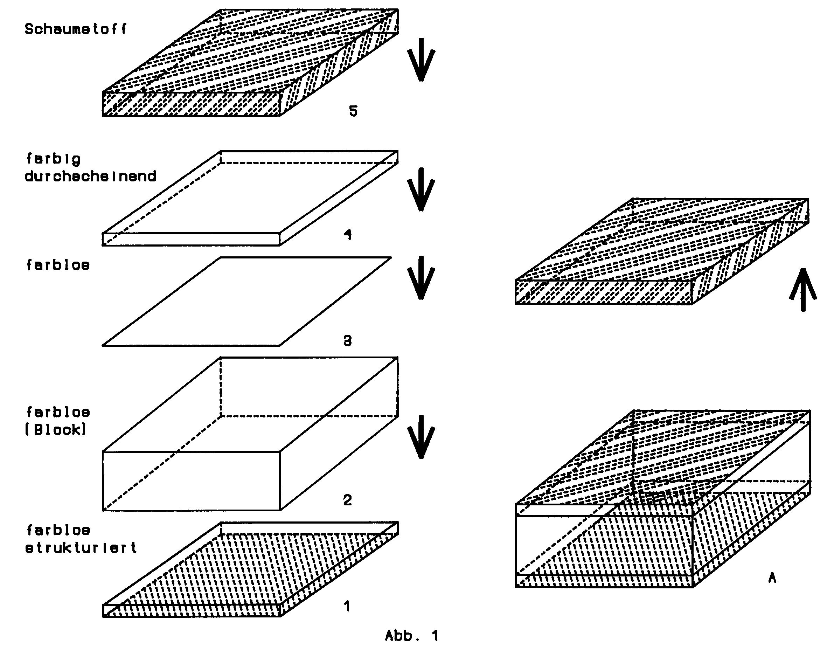

In Abb. 1 ist ein Verbund (A) dargestellt, der aus den Kunststoffteilen:
oberflächlich strukturierte, farblose Acrylglas-Extrusionsplatte (1), farbloser, gegossener Acrylglasblock (2), farblose PMMA-Zwischenschicht (3) und farbig, transparente Acrylglas-Extrusionsplatte (4) besteht, die beim Verbinden durch thermisches Verschweißen in einer Presse durch Zwischenlegen eines Polyetherschaumstoffs (5), gleichzeitig und in bekannter Weise, mattiert wird.

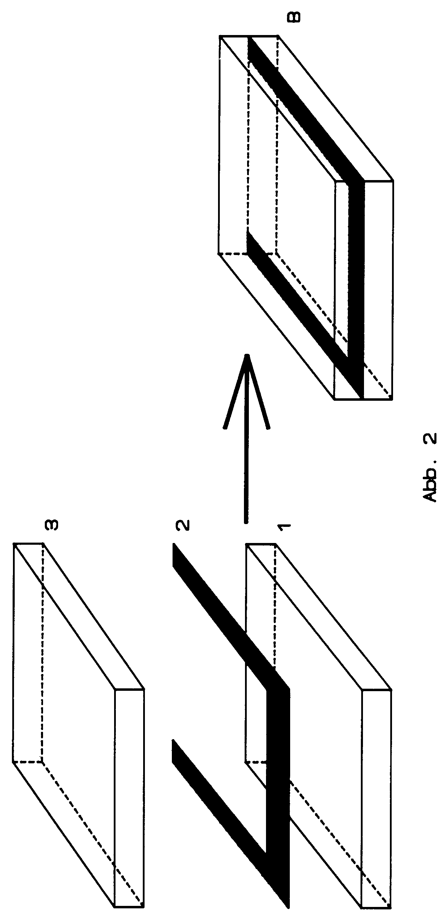

Die Abb. 2 zeigt einen Verbund (B) mit den transparenten Acrylglasplatten (1) und (3), die nur am Rand über eine PMMA-Zwischenschicht (2) verschweißt miteinander verbunden sind, wodurch im Inneren, entsprechend der Dicke der PMMA-Zwischenschicht, ein, meist rechteckiger, Hohlraum bleibt, der zur Aufnahme von gegebenenfalls auswechselbaren Informationen als Einlagen, an der nicht durch Schweißung verbundenen Kantenseite dienen kann. Solche Verbunde finden Verwendung als Schlüsselanhänger, insbesondere in Hotels, als Werbeaufsteller, als Fahrplanabdeckungen und ähnlichem.
Mit farbigen PMMA-Zwischenschichten haben die Verbunde (B) einen entsprechend farbigen Rahmen.

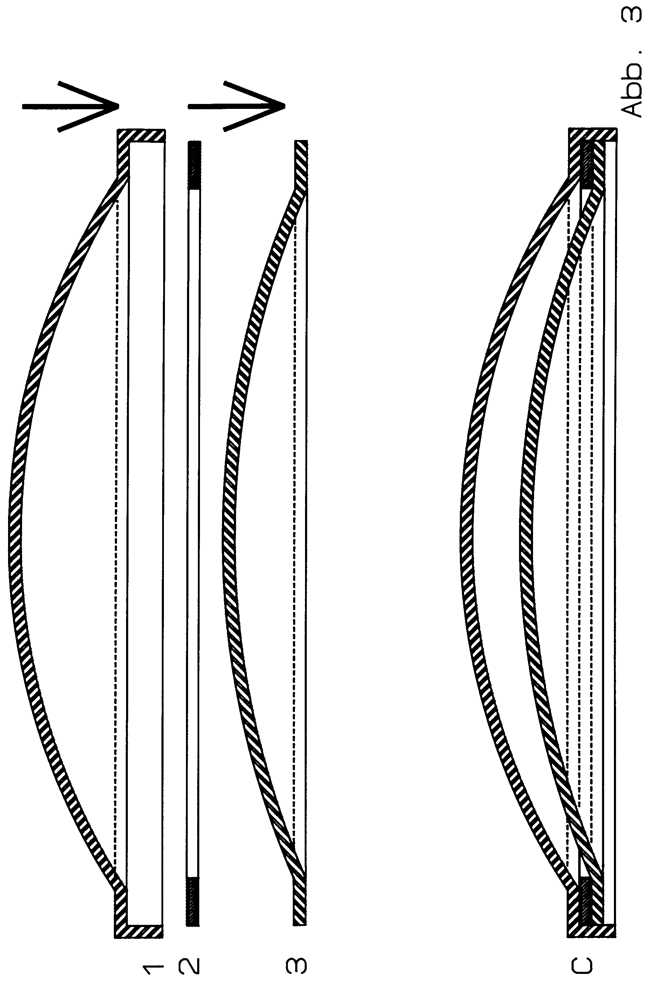

Abb. 3 zeigt als Beispiel mehrschaliger erfindungsgemäßer Verbunde eine doppelschalige Lichtkuppel (C), die aus den Acrylglas-Verbundteilen (1) und (3), den beiden Schalen, und der PMMA-Zwischenschicht (2) besteht.
Auch Wohnwagenfenster und ähnliche Doppelverglasungen sind nach der Erfindung so verbunden, daß lediglich am Rand eine Schweißverbindung zwischen einer ebenen Platte und einem Formteil oder zwischen zwei Formteilen über die PMMA-Zwischensicht besteht.

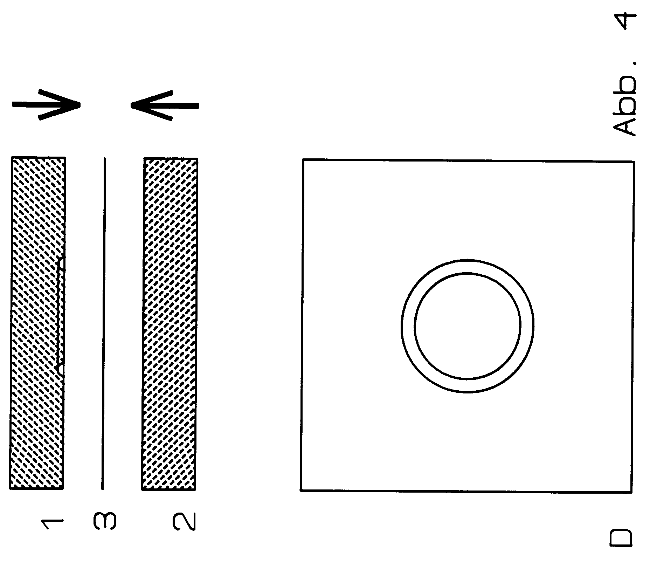

In Abb. 4 ist eine Draufsicht auf einen Verbund (D) wiedergegeben, der im Inneren des Blocks eine Gravur oder einen Siebdruck oder andere ins Acrylglas eingearbeitete Zeichen enthält, und der durch Verschweißen der Platten (1), enthaltend das eingravierte Symbol, und (2) über die PMMA-Zwischenschicht (3) entstanden ist.

Erfindungsgemäß verschweißte Verbunde aus Acrylglas und Bisphenol A-Polycarbonat sind schlagfeste und gegen Erosion, UV-Strahlung und Alkali-Einflüsse besser beständige Verglasungen als solche aus den Einzelkunststoffen, und die beispielsweise zum Maschinenschutz verwendet werden können.

Gegossene Blöcke lassen sich vorteilhaft mit der erfindungsgemäßen dünnen PMMA-Zwischenschicht zu größeren Blöcken und damit zu Blöcken mit größeren Flächen als den gießbaren Flächen, verbinden.

## Patentansprüche

1. Kunststoffverbunde, bei denen mindestens ein Teil des Verbundes aus Acrylglas besteht und mindestens eine Acrylglasverbindung durch Verschweißen bewirkt ist,
dadurch gekennzeichnet,
daß das Verbinden durch thermisches Verschweißen in Gegenwart einer 0,01 bis zu einigen mm dicken Zwischenschicht eines im wesentlichen aus Methylmethacrylat aufgebauten Polymeren erreicht ist.

2. Kunststoffverbunde bei denen mindestens ein Teil des Verbundes aus Acrylglas besteht und mindestens eine Acrylglasverbindung durch Verschweißen bewirkt ist und diese Verbindung in den Randbezirken wirkt und in deren Nichtrandgebieten Hohlräume bleiben, die auch zur Aufnahme von Einlagen dienen können,
dadurch gekennzeichnet,
daß das Verbinden durch thermisches Verschweißen in Gegenwart einer 0,01 bis zu einigen mm dicken Zwischenschicht eines im wesentlichen aus Methylmethacrylat aufgebauten Polymeren in den Randbezirken erreicht ist.

3. Kunststoffverbunde nach Anspruch 2, dadurch gekennzeichnet, daß sie mehrschalige Verbunde, auch solche aus nicht planaren Formteilen sind.

4. Kunststoffverbunde nach den Ansprüchen 1 bis 3, dadurch gekennzeichnet, daß das verbundene Acrylglas transparent oder pigmentiert, farblos oder farbig sein kann.

5. Kunststoffverbunde nach den Ansprüchen 1 bis 4, dadurch gekennzeichnet, daß die 0,01 bis zu einigen mm dicke Zwischenschicht eines im wesentlichen aus Methylmethacrylat aufgebauten Polymeren, transparent oder pigmentiert, farblos oder farbig sein kann.

6. Kunststoffverbunde nach den Ansprüchen 1 bis 5, dadurch gekennzeichnet, daß sie in Verbundteilen eingearbeitete Zeichen enthalten.

7. Kunststoffverbunde nach den Ansprüchen 1 bis 6, dadurch gekennzeichnet, daß darin Acrylglas mit anderen Kunststoffen verbunden ist.

8. Kunststoffverbunde nach den Ansprüchen 1 bis 7, dadurch gekennzeichnet, daß Acrylglas mit Bisphenol A-Polycarbonat als anderem Kunststoff verbunden ist.

9. Verfahren zur Herstellung von Kunststoffverbunden nach den Ansprüchen 1 bis 8, bei denen mindestens ein Formteil aus Acrylglas mit einem anderen Kunststofformteil durch thermisches Verschweißen verbunden wird, dadurch gekennzeichnet, daß das Verbinden durch thermisches Verschweißen in Gegenwart einer 0,01 bis zu einigen mm dicken Zwischenschicht eines im wesentlichen aus Methylmethacrlyat aufgebauten Polymeren durchgeführt wird.
